# EUROPEAN PATENT SPECIFICATION

(11) **EP 2 419 252 B1**
(45) Date of publication and mention of the grant of the patent: **31.05.2017**
(21) Application number: 10723320.7
(22) Date of filing: 14.04.2010
(51) Int. Cl.: B29C 41/00, B29C 41/36, B29C 43/20, B29C 43/18, B29C 37/00, B29C 70/34, B05B 15/04

(54) **POWDER IN-MOLD COATING BY COMPRESSION MOULDING ITEMS**
PMIC (POWDER IN-MOULD COATING) DURCH PRESSFORMUNG VON OBJEKTEN
REVÊTEMENT PAR POUDRE AU MOULAGE DES ARTICLES PAR COMPRESSION

(30) Priority: 17.04.2009 US 170280 P
(43) Date of publication of application: 22.02.2012
(73) Proprietor: Orlite Industries Ltd., 74030 Ness Ziona (IL)
(72) Inventor: OLY, Shuky, 75268 Rishon Lezion (IL); FISH, Boris, 38236 Hadera (IL)
(74) Representative: Harrison IP Limited
(86) International application number: PCT/IB2010/051631
(87) International publication number: WO 2010/119414

(56) References cited:
- EP-A1- 0 540 941
- US-A- 4 472 451
- US-B1- 6 579 488

## Description

### FIELD AND BACKGROUND OF THE INVENTION

The invention, in some embodiments, relates to the field of powder in-mold coating of thermosets and more particularly, but not exclusively, to a method for performing powder in-mold coating that in some embodiments provides results superior to prior methods.

Thermosets are plastic materials that start as semi-fluid masses of low molecular weight resin compositions that cure (polymerize) upon application of heat. Typical thermosets are thermoset polyesters, epoxy, acrylics, TGIC polyester and urethane polyester.

A popular method of fashioning items from thermosets, especially flat or curved items, is compression molding using a mold-press. A plastic charge of a thermoset resin is loaded onto an upwardly facing female mold surface of a lower part of a mold of the mold-press, as sheets cut to an appropriate size (SMC - sheet molding compound) or as a suitable mass of resin (BMC - bulk molding compound). The mold-press is activated moving the downwardly facing male mold surface of an upper part of the mold of the mold-press towards the female mold surface against the charge of resin. The pressure applied on the resin charge forces the resin to spread outwards and entirely fill the volume between the female and male surfaces of the mold parts. After the resin has sufficiently cured, the mold parts are moved apart and the formed item removed from the mold.

In some instances fibers such as glass fibers are placed together with the resin charge in the mold to make glass-reinforced thermoset. Typically, glass-reinforced thermoset is made using SMC including sheets of glass fibers together with sheets of thermoset resin. Glass-reinforced thermoset is relatively cheap and simple to make, and provides strong and esthetic items at a reasonable price.

Compression molded thermosets, especially glass-fiber reinforced polyesters, are a popular choice for the production of enclosures for outdoor use such as junction enclosures, control enclosures, and cabinets for power distribution, telecommunication, cable and telephony.

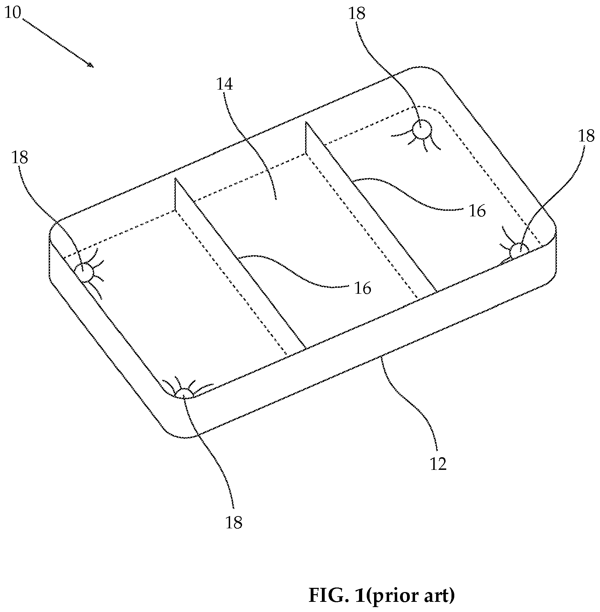

Generally, a number of panels corresponding to the sides of the enclosure are individually made by compression molding with embedded fittings (typically of metal, such as nuts) and the panels assembled together to make the enclosure. A typical such panel **10** is depicted in Figure 1. Panels such as **10** for making enclosures have a number of characteristics that influence how compression molding manufacture is implemented.

The outside of enclosures should be smooth and substantially featureless, to simplify maintenance, for durability and for esthetic reasons, so the outer surface (e.g., **12**) of a panel should be smooth and featureless. Consequently, the inner surface (e.g., **14)** of a panel bears necessary features such as reinforcing ribs and struts (e.g., **16)** and fittings **18.** As a result, in compression molding of such panels, the male mold part corresponds to the inner surface of the panel while the female mold part corresponds to the outer surface of a panel.

To make the manufacturing process efficient the lower mold part of the mold of the mold-press bears an upwardly facing male mold surface while the upper mold part of the mold of the mold-press bears a downwardly facing female mold surface. Fittings, required for example, for assembly of the enclosure or for mounting equipment in the enclosure are placed on the upwardly facing mold surface of the lower mold part. A plastic charge (usually SMC sheets) of thermoset resin and glass fibers is placed on the upwardly facing mold surface. The mold-press is activated, lowering the upper mold surface to press and force the thermoset resin and fibers to spread outwards in the volume between the upper and lower mold surfaces of the mold. After the resin is sufficiently cured, the mold parts are moved apart and the panel separated from the mold surfaces. The fittings are embedded in the lower surface of the resulting panel, the surface fashioned by the lower male mold surface. The enclosure is then assembled from the separate panels.

As the inside of an enclosure is hidden from view and protected from the elements, it is unnecessary and therefore economically undesirable to modify the inner surfaces of the component panels, for example by painting.

On the other hand, it is generally desirable to have the option to provide the outside of such enclosures and therefore the outside surface of the component panels with a desirable color. Painting requires an additional production step, extra care during handling and transport to ensure that the paint coating is not damaged, and periodic repainting of the enclosure.

Further, during normal use the outside of such enclosures is exposed to contact with objects that may lead to scratching and staining of the outer surfaces of the component panels.

Further, during normal use, the outside of such enclosures is exposed to the elements including sunlight, hot / cold cycles, wind-borne abrasives as well as chemical pollutants. One of the common results of exposure to the elements is fiber blooming where the outside surfaces of the enclosure are eroded so that the glass fibers become apparent. Not only is fiber blooming esthetically undesirable, there is also a public health and safety issue that potentially arises when a person rubs against the exposed glass fiber.

It is therefore desirable to treat the outer surfaces of fiber-reinforced thermoset items to impart a desired color, to increase hardness and to reduce fiber blooming. It is critical that such treatment be cheap so as not to significantly increase the price of the final produced item.

US-A-4 472 451 discloses making an item in a mold-press, wherein a powder in-mould coating (PIMC) spray booth is being used for applying a powder layer to an upper mould surface prior to press moulding.

### SUMMARY OF THE INVENTION

The objective of the invention is achieved by the method and device according to appended claims 18. Preferred embodiments are disclosed in the dependent claims.

The invention relates to a method for performing powder in-mold coating (PIMC) that have advantages over known methods. The invention also relates to a device for performing PIMC.

According to the invention there is provided a method for making an item in a mold-press, comprising:
a) substantially isolating an upper mold surface of an upper mold part of the mold-press inside a PIMC spraying booth by engaging the upper mold part with the spraying booth so that an outer rim of an aperture of the spraying booth is intimately encircled by a mold seam area of the upper mold surface;
b) while the upper mold surface is substantially isolated inside the spraying booth, electrostatically applying a layer of PIMC thermoset resin powder to the upper mold surface;
c) disengaging the spraying booth from the upper mold part so as not to interfere with mold closing;
d) placing a charge of plastic thermoset resin on a lower mold surface of a lower mold part of the mold-press;
e) activating the mold-press to close the mold, bringing the upper mold surface and the lower mold surface together so as to spread the plastic thermoset resin charge to fill the volume between the upper and lower surfaces of the mold and to contact the applied PIMC resin powder with a surface of the plastic thermoset resin charge;
f) subsequent to 'e', allowing the spread thermoset resin to cure, opening the mold to separate the upper and lower mold surfaces, and removing the cured thermoset resin as the item.

In some embodiments, while the upper mold surface is substantially isolated inside the spraying booth, the gap between the outer rim of the aperture of the spraying booth and the mold seam area of the upper mold part is an average of not more than about 0.2 mm, in some embodiments not more than about 0.15 mm, and in some embodiments even not more than about 0.1 mm.

According to the invention there is also provided a PIMC device, comprising:
a) a mold-press suitable for compression molding of thermosets including a mold having least two mold parts:
   i. an upper mold part with an upper mold surface; and
   ii. a lower mold part with a lower mold surface
   the mold-press configured to close the mold by moving the upper mold part and the lower mold part together to a closed state and apart to an open state;
b) a PIMC spraying booth configured to reversibly engage the upper mold part so that when said spraying booth engages said upper mold part an outer rim of an aperture of the spraying booth is intimately encircled by a mold seam area of the upper mold surface so as to substantially isolate the upper mold surface inside the spraying booth; and
c) an electrostatic sprayer with at least one nozzle configured for electrostatic application of PIMC resin powder to the upper mold surface when substantially isolated inside the spraying booth.

In some embodiments, when the upper mold surface is substantially isolated inside the spraying booth, the gap between the outer rim of the aperture of the spraying booth and the mold seam area of the upper mold part is an average of not more than about 0.2 mm, in some embodiments not more than about 0.15 mm and in some embodiments even not more than about 0.1 mm.

Unless otherwise defined, all technical and scientific terms used herein have the same meaning as commonly understood by one of ordinary skill in the art to which the invention pertains.

As used herein, the indefinite articles "a" and "an" mean "at least one" or "one or more" unless the context clearly dictates otherwise.

### BRIEF DESCRIPTION OF THE FIGURES

Some embodiments of the invention are herein described, by way of example only, with reference to the accompanying figures. The description, together with the figures, makes apparent how embodiments of the invention may be practiced to a person having ordinary skill in the art. The figures are for the purpose of illustrative discussion of embodiments of the invention and no attempt is made to show structural details of an embodiment in more detail than is necessary for a fundamental understanding of the invention. For the sake of clarity, some objects depicted in the figures are not to scale.

In the Figures:
FIG. 1 (prior art) is a schematic depiction of a component panel of an enclosure made using compression molding of a thermoset plastic;
FIGS. 2A, 2B and 2C are schematic depictions of an embodiment of a PIMC device useful for implementing some embodiments of the invention;
FIGS. 3A and 3B are schematic depictions of embodiments of PIMC-spraying booths useful in implementing some embodiments of the invention;
FIGS. 4A, 4B and 4C are schematic depiction of an embodiment of a PIMC device useful for implementing some embodiments of the invention;
FIG. 5 is a schematic depiction of a spraying booth comprising an upper aperture part and a lower enclosure part;
FIG. 6 is a schematic depiction of a stage in preparation of an outer rim of an aperture of a spraying booth having the required gap size;
FIGS. 7A and 7B (prior art) schematically depict a traditional mold design; and
FIGS. 8A, 8B and 8C schematically depicts an embodiment of an upper mold part (Figure 8A), the upper mold part engaged with a spraying booth (Figure 8B); and the upper mold part with a corresponding lower mold part (Figure 8C).

### DESCRIPTION OF SOME EMBODIMENTS OF THE INVENTION

The principles, uses and implementations of the teachings of the invention may be better understood with reference to the accompanying description and figures. Upon perusal of the description and figures present herein, one skilled in the art is able to implement the teachings of the invention without undue effort or experimentation.-

Before explaining at least one embodiment of the invention in detail, it is to be understood that the invention is not necessarily limited in its application to the details of device and/or method set forth herein. The invention is capable of other embodiments or of being practiced or carried out in various ways within the scope of invention as defined by the appended claims. The phraseology and terminology employed herein are for descriptive purpose and should not be regarded as limiting.

As noted above, compression molded thermoset plastics, especially glass-fiber reinforced thermosets, especially polyesters, are a popular choice for the production of items, such as enclosures, for outdoor use. However, as noted above, there is a desire to impart color to, to increase hardness of and to reduce fiber blooming of the outside surfaces of such enclosures.

A potential solution for imparting the component panels of such an enclosure with a chosen color, increased hardness for scratch, impact and stain resistance as well as reduced fiber blooming is powder in mold coating (PIMC). In PIMC, dry powdered thermoset resin (including additives such as pigments) is sprayed using an electrostatic spray gun on an upwardly facing lower female mold surface so that the PIMC resin powder adheres by electrostatic attraction to the lower mold surface in a thin, uniform layer.

The lower mold surface is heated so that the PIMC resin powder melts and partially cures on the lower mold surface (typically for about 10 seconds). A resin charge is placed on the upwardly facing mold surface in the usual way and the mold parts brought together. Inside the mold, during the curing process, the PIMC resin powder chemically bonds to the surfaces of the item. When separated from the mold, the surfaces of the item are covered with an integrally formed PIMC layer of uniform thickness (generally 150 - 250 micrometers) having desired properties.

In reality, there are a number of significant challenges in implementing PIMC that relate to excess PIMC resin powder. It is difficult to isolate the PIMC resin powder to the mold and often metal surfaces in an entire work area are eventually undesirably coated with PIMC resin powder. PIMC resin powder accumulates on the mold seams of the mold parts, and must be removed before the mold parts are brought together. Practically speaking, this means that often an otherwise automated or semi-automated process must be stopped every few press cycles to allow cleaning of the mold seams.

Since the entire work area becomes coated with PIMC resin powder and since every few press cycles the production process must be stopped for mold seam cleaning, it is too expensive to practically implement PIMC of component panels of enclosures.

An additional challenge in implementing PIMC relates to the difficulties of applying PIMC to a downwardly facing upper mold surface, for example, to allow PIMC of component panels of enclosures. The invention relates to a method and a device that allow the practical implementation of PIMC, for example of component panels of enclosures and similar items. Specifically, the method and device according to the invention reduce contamination of the work place and reduce mold seam coating by PIMC resin powder. As a result, the work place remains cleaner and there is reduced down-time required for mold seam cleaning.

### Method of Powder In-Mold Coating

According to the invention, there is provided a method for making a thermoset item in a mold-press, comprising:
a) substantially isolating an upper mold surface of an upper mold part of the mold-press inside a PIMC spraying booth, by engaging the upper mold part with the spraying booth so that an outer rim of an aperture of the spraying booth is intimately encircled by the mold seam area of the upper mold surface;
b) while the upper mold surface is substantially isolated inside the spraying booth, electrostatically applying a layer of PIMC resin powder (especially thermoset PIMC resin powder) to the upper mold surface;
c) disengaging the spraying booth from the upper mold part so as not to interfere with mold closing;
d) placing a charge of plastic thermoset resin on the lower mold surface of the lower mold part of the mold-press;
e) activating the mold-press to close the mold, bringing the upper mold surface and the lower mold surface together so as to spread the plastic thermoset resin charge to fill the volume between the upper and lower surfaces of the mold and to contact the applied PIMC resin powder with a surface of the plastic thermoset resin charge;
f) subsequent to 'e', allowing the spread thermoset resin charge to cure, opening the mold to separate the upper and lower mold surfaces, and removing the cured thermoset resin as the thermoset item.

The placing of the charge of plastic thermoset resin 'd' may be performed at any suitable time. In some embodiments, the placing is prior, during or subsequent to the engaging of the upper mold part with the spraying box. In some embodiments, the placing is prior, during or subsequent to the disengaging of the upper mold part from the spraying box. The upper mold surface is a downwardly facing mold surface and the lower mold surface is an upwardly facing mold surface. Electrostatic application of the PIMC resin powder is performed with the help of an electrostatic sprayer, for example a commercially available corona-type spray gun, e.g., from Larius Srl, Calolziocorte, LC, Italy.

By "intimately encircles" is meant that while the upper mold surface is substantially isolated inside the spraying booth, the gap between the outer rim of the aperture of the spraying booth and the mold seam area of the upper mold part of the mold-press is very small. In some embodiments, while the upper mold surface is substantially isolated inside the spraying booth the gap between the outer rim of the aperture and the mold seam area around the periphery of the aperture when engaging the upper mold part is on the average not more than about 0.2 mm, not more than about 0.15 mm and even not more than about 0.1 mm.

When the outer rim of the aperture of the spraying booth is intimately encircled by the mold seam area of the upper mold surface and the upper mold surface is substantially isolated inside the spraying booth (so that other components of the press mold and other portions of the upper mold part including the mold seam area are not contained inside the spraying booth), sprayed PIMC resin powder that does not coat the upper mold surface cannot pass the booth aperture / upper mold seam area interface. The upper mold seam area of the upper mold surface remains substantially clean and free of PIMC resin powder, and substantially no PIMC resin powder escapes the confines of the spraying booth to cover surfaces in the work area. Since the mold seam area remains free of PIMC resin powder, it is not necessary to intermittently stop the molding process to clean the mold seam area.

In the art, PIMC resin powder is applied to a lower mold surface, amongst other reasons, because it is relatively simple and easy to direct the nozzle of an electrostatic sprayer downwards. In contrast , when PIMC resin powder is applied to an upper mold surface such as when implementing the teachings of the invention, it is necessary to have a relatively complex assembly or mechanism such as a robot to maintain the spraying booth engaged with the upper mold part during the application of the PIMC resin powder, and to disengage from the upper mold part quickly and cleanly to avoid over- or under-curing of the applied PIMC resin powder prior to mold closing.

Despite this, application of PIMC resin powder to an upper mold surface in accordance with some embodiments of the invention, for example for the manufacture of component panels of enclosures, allows for a produced item having an improved outer surface and the simple installation of fittings.

Further, it has been found that it is easier to achieve a high-quality PIMC surface with fewer rejects, that is to say, the method is more robust and less sensitive to spray parameters than methods known in the art where PIMC resin powder is applied to a lower mold surface. Without wishing to be held to any one theory, it is believed that the increased ease of achieving a high-quality PIMC surface results, at least in part, from the isolation of the upper mold surface inside the spraying booth, together with the upward application of the PIMC resin powder to the upper mold surface that allows excess PIMC resin powder to drop from the upper mold surface and reduces accumulation of PIMC resin powder at the interface between the mold seam area of the rim of the aperture of the spraying booth.

In some embodiments, during and/or subsequent the application of the PIMC resin powder layer, while the upper mold part is substantially isolated in the spraying booth, excess PIMC resin powder is evacuated from the spraying booth, for example by generating air flow inside the spraying booth (e.g., by applying suction). In some embodiments, such excess PIMC resin powder is discarded. In some embodiments, such excess PIMC resin powder is recovered for reuse, for example, using a filter, cyclone precipitator or electrostatic precipitator.

In some not claimed embodiments, the inner surfaces and even substantially the entire spraying booth are fashioned of a material or materials to which PIMC resin powder does not substantially electrostatically adhere for example are fashioned from a material such as wood, plastic, paper, cardboard or polyvinylchloride. In some such not claimed embodiments, PIMC resin powder that does not coat the upper mold surface of the upper mold part falls to the bottom of the spraying booth to be easily recoverable or, if applicable, is evacuated from the spraying booth.

In some not claimed embodiments, the inner surfaces of the spraying booth are fashioned of a material or materials to which PIMC resin powder electrostatically adheres, such as a metal. In some such not claimed embodiments, some PIMC resin powder that does not coat the upper mold surface of the upper mold part adheres to the inner walls of the spraying booth. According to an embodiment, prior to closing the mold and spreading the plastic thermoset resin, the PIMC resin powder is allowed to at least partially cure on the upper mold surface.

In some not claimed embodiments, the time required to disengage the spraying booth from the upper mold part and move the spraying booth out from between the two mold parts so as not to interfere with mold closing is not more than the time required or sufficient partial curing of the PIMC resin powder. Thus, the disengaging and moving of the spraying booth does not substantially effect the cycle time.

Additionally, in some not claimed embodiments it is advantageous during at least part of the time required for the partial curing, to maintain the spraying booth engaged with the upper mold part to allow non-adhering PIMC resin powder to settle in the spraying booth so that during the disengaging, PIMC particles are not attracted to the mold seam area of the upper mold surface.

In some not claimed embodiments, the disengaging of the spraying booth from the upper mold part is prior to substantial partial curing of the applied PIMC resin powder.

In some not claimed embodiments, the disengaging of the spraying booth from the upper mold part is subsequent to substantial partial curing of the applied PIMC resin powder. In such not claimed embodiments, the process of disengagement of the spraying booth from the upper mold part cleanly tears the film formed by the partially cured layer of PIMC resin powder.

In some not claimed embodiments the downwardly facing mold surface is the female mold surface and the upwardly facing mold surface is the male mold surface. That said, in some not claimed embodiments, the downwardly facing mold surface is the male mold surface and the upwardly facing mold surface is the female mold surface

In some not claimed embodiments, for example when making component panels of enclosures, fittings are placed in the appropriate places of the mold parts prior to activation of the mold-press so that the fittings are embedded in the thermoset item. Fittings are preferably placed in the appropriate location on the (upwardly facing) lower mold surface of the lower mold part. In such a way, the fittings rest on the mold and exceptionally complex means are not required to keep the fittings from falling, for example, as would potentially occur if the fittings are placed on the (downwardly facing) upper mold surface of the upper mold part.

The charge of plastic thermoset resin may be in any suitable form. Suitable such thermoset resins are commercially available. In some not claimed embodiments the charge of plastic thermoset is supplied as sheets (SMC - sheet molding compound). In some embodiments the charge of plastic thermoset is supplied as suitable mass (BMC - bulk molding compound). In some not claimed embodiments where the thermoset item to be made is a component panel of an enclosure, the charge of plastic thermoset resin is supplied as sheets.

The charge of plastic thermoset resin may be of any suitable composition, for example thermoset polyesters, epoxy, acrylics, polyphenols, TGIC polyester and urethane polyester, especially polyesters. In some not claimed embodiments, the charge of plastic thermoset resin includes fibers, for example glass fibers. In some not claimed embodiments, the charge of plastic thermoset resin is substantially devoid of such fibers. In some not claimed embodiments where the thermoset item to be made is a component panel of an enclosure, the charge of plastic is a thermoset resin including polyester, preferably including fibers, especially glass-fibers so that the resulting panel is of glass-reinforced polyester.

Any suitable composition of thermoset PIMC resin powder may be used in implementing the invention. Suitable PIMC resin powders are commercially available, for example, from Synres-Almoco b.v., a subsidiary of Raschig GmbH, Hoek van Holland, The Netherlands. In some not claimed embodiments (and depending on the desired finished item surface properties and the nature of the charge of thermoset resin) the thermoset PIMC resin powder is selected from the group consisting of epoxy, polyester, polyester TGIC, epoxy-polyester hybrids, urethane polyester, polyvinylidene fluoride, acrylic, polyvinyl chloride, polyolefins and nylon. In some embodiments where the thermoset item to be made is a component panel of an enclosure, the thermoset PIMC resin powder is suitable for coating polyester or glass-reinforced polyester, and is preferably chosen to increase surface hardness and to improve weatherability. A typically suitable PIMC resin powder is PIMC-1241 from Synres-Almoco b.v. a subsidiary of Raschig GmbH, Hoek van Holland, The Netherlands.

Details and parameters for implementing the method, including process parameters such as choice of type and amounts of materials, spray settings, temperatures, press settings, rates of mold opening and closing, are substantially similar to known PIMC parameters and are easily determined by a person having ordinary skill in the art upon perusal of the description herein.

### Device for Powder In-Mold Coating

According to the invention there is provided a PIMC device, comprising:
a) a mold-press suitable for compression molding of thermosets including a mold having least two mold parts:
   i. an upper mold part with an upper mold surface; and
   ii. a lower mold part with a lower mold surface
   the mold-press configured to close the mold by moving the upper mold part and lower mold part together to a closed state and apart to an open state;
b) a PIMC spraying booth configured to reversibly engage the upper mold part, so that when said spraying booth engages said upper mold part an outer rim of an aperture outer rim of the spraying booth is intimately encircled by the mold seam area of the upper mold surface so as to substantially isolate the upper mold surface inside the spraying booth when engaging the upper mold part; and
c) an electrostatic sprayer with at least one nozzle configured for electrostatic application of PIMC resin powder to the upper mold surface when substantially isolated inside the spraying booth.

By "intimately encircles" is meant that when the upper mold surface is substantially isolated inside the spraying booth, the gap between the outer rim of the aperture of the spraying booth and the mold seam area of the upper mold part of the mold is very small. In some embodiments, when the upper mold surface is substantially isolated inside the spraying booth, the gap between the outer rim of the aperture of the spraying booth and the mold seam area of the upper mold part is an average of not more than about 0.2 mm, not more than about 0.15 mm and even not more than about 0.1 mm.

In some not claimed embodiments, the inner surfaces of the spraying booth and even the entire spraying booth are fashioned of a material or materials to which PIMC resin powder does not substantially electrostatically adhere (materials that can be electrostatically charged), for example are fashioned from a material such as wood, plastic, paper, cardboard or polyvinylchloride.

In some not claimed embodiments, the inner surfaces of the spraying booth are fashioned of a material or materials to which PIMC resin powder electrostatically adheres.

In some not claimed embodiments, the PIMC device includes a spraying booth moving mechanism configured to automatically or semi-automatically move the spraying booth to engage the upper mold part, maintain the spraying booth in an engaged state for the desired period of time and to disengage the spraying booth from the upper mold part. In some embodiments, such mechanism is a suitable robot, for example an appropriately modified robot available from ABB Robotics Ltd., Zurich, Switzerland.

In some not claimed embodiments, a PIMC device includes an excess PIMC resin powder container. During operation, excess PIMC resin powder that accumulates at the bottom of the spraying booth is emptied into the excess PIMC resin powder container, for example a spraying booth moving mechanism is used to tip the contents of the spraying booth into the container.

In some not claimed embodiments for making component panels of enclosures, the downwardly facing mold surface is the female mold surface and the upwardly facing mold surface is the male mold surface. In some embodiments, the downwardly facing mold surface is the male mold surface and the upwardly facing mold surface is the female mold surface

In some not claimed embodiments, the mold-press of the PIMC device is configured so that the lower mold part is static and the upper mold part moves downwards to bring the mold to the closed state and upwards to bring the mold to an open state. In some embodiments, the mold-press is configured so that the upper mold part is static and the lower mold part moves upwards to bring the mold to the closed state and downwards to bring the mold to an open state. In some embodiments, the mold-press is configured so that both the upper mold part and the lower mold part both move, moving together to bring the mold to the closed state and moving apart to bring the mold to an open state.

Any suitable electrostatic sprayer may be used in implementing the invention. Suitable electrostatic sprayers are commercially available, for example commercially available corona type spray guns, e.g., from Larius Srl, Calolziocorte, LC, Italy.

In some not claimed embodiments, the at least one nozzle is configured to apply a substantially even coating of PIMC resin powder to substantially the entire upper mold surface substantially simultaneously when the spraying booth is engaged with the upper mold part. In some such not claimed embodiments, the at least one nozzle is static during application of the PIMC resin powder to the upper mold surface.

In some not claimed embodiments, the at least one nozzle is configured to apply PIMC resin powder to only a part of the upper mold surface at any one time. In some such not claimed embodiments, the at least one nozzle is configured to move inside the spraying booth when the spraying booth is engaged with the upper mold part, allowing application of a substantially uniform coating of PIMC resin powder to substantially the entire upper mold surface. During application of PIMC resin powder, the electrostatic sprayer is moved inside the spraying booth to apply PIMC resin powder to the entire upper mold surface. In some not claimed embodiments, moving of the at least one nozzle is performed automatically or with the help of a robot to ensure that PIMC resin powder is uniformly applied to the entire upper mold surface.

In some not claimed embodiments, the at least one nozzle of the electrostatic sprayer is configured to move in and out of the spraying booth, as desired. For example, in some such embodiments, the at least one nozzle is mounted on the arm of a robot and the spraying booth includes a window. In some such not claimed embodiments, when the spraying booth engages the upper mold part, the robot moves the at least one nozzle into the spraying booth through the window to apply PIMC resin powder to the upper mold surface. Subsequently, the at least one nozzle is removed from the spraying booth through the window and the spraying booth disengaged from the upper mold part.

In some not claimed embodiments, the at least one nozzle is contained inside the spraying booth and is configured to move together with the spraying booth, for example throughout the process of engaging the upper mold part and disengaging from the upper mold part.

In some embodiments, a PIMC device further comprises an evacuation assembly functionally associated with the spraying booth, configured for evacuating PIMC resin powder suspended inside the spraying booth when the spraying booth is engaged with the upper mold part. In some such not claimed embodiments, the evacuation assembly is configured to evacuate powder through a duct in fluid communication with the inside of the spraying booth. Suction applied by the evacuation assembly draws suspended PIMC resin powder out of the spraying booth. In some embodiments, the spraying booth also includes a gas inlet that allows gas such as air to enter the spraying booth when the evacuation assembly is being operated. Generally, the evacuation assembly is operated during and/or subsequent to application of PIMC resin powder to the upper mold surface. Excess PIMC resin powder in the spraying booth that does not settle at the bottom of the spraying booth is evacuated by the evacuation assembly through the duct. In some not claimed embodiments, the evacuated PIMC resin powder is discarded. In some not claimed embodiments, the evacuated PIMC resin powder is recovered, for example with the help of a component such as a filter, cyclone precipitator or electrostatic precipitator for reuse.

In some not claimed embodiments, a PIMC device as described above is configured for substantially manual use and includes appropriate manual controls, as well known in the field of compression molding. A disadvantage of manual use is that the spraying booth is preferably engaged with the upper mold part throughout the electrostatic application of the PIMC resin powder and the upper mold part is preferably carefully removed quickly enough so that the applied PIMC resin powder does cure too much (for example, to an extent that adhesion of the resin powder to the plastic thermoset resin charge is substantially adversely effected) prior to mold closing. In some not claimed embodiments, a PIMC device as described above is configured for semiautomatic or substantially automatic use, as well known in the field of compression molding. In some such not claimed embodiments a PIMC device is provided with one or more robots to perform the required tasks semi-automatically or substantially automatically.

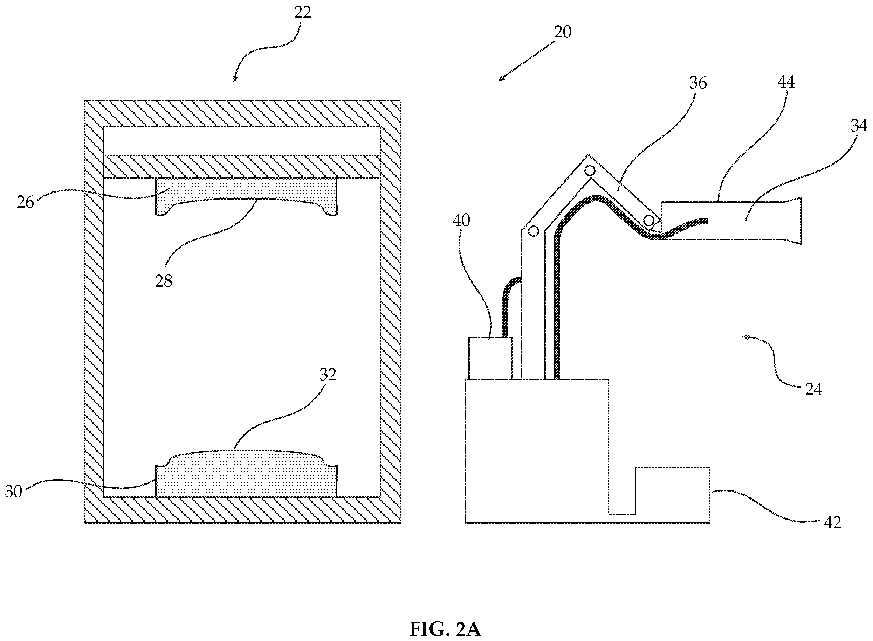

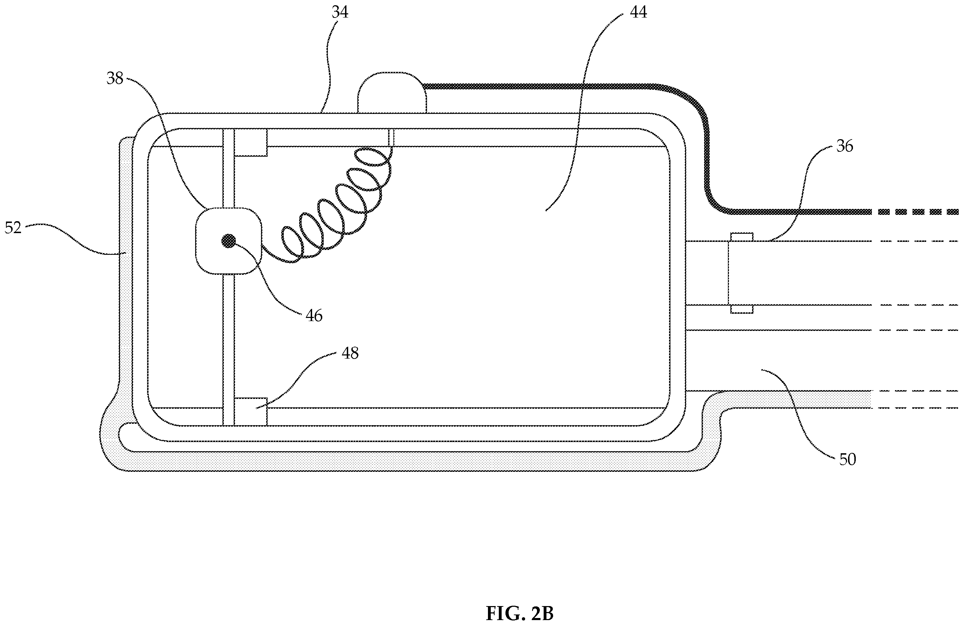

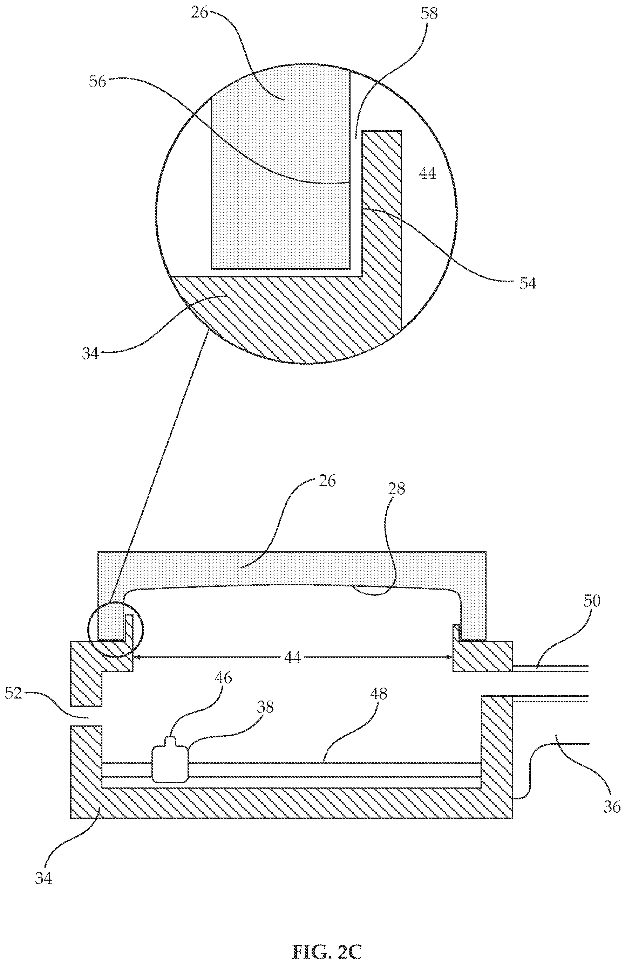

As is known in the art, a lower mold part of a mold-press is generally provided with ejectors, components that release a cured item from the mold while an upper mold part is generally devoid of such ejectors. Since according to embodiments of the invention PIMC resin powder is applied to the upper mold part, in some not claimed embodiments, there is no need for special modification of ejectors for implementing the invention. In some not claimed embodiments where the upper mold part is provided with ejectors, it is preferred that the ejectors be non-contact ejectors, e.g., air valve ejectors, to reduce the chance of marking or damaging a produced PIMC-coated surface. The method will be described with reference to PIMC device **20** schematically depicted in Figures 2A, 2B and 2C.

PIMC device **20,** substantially entirely depicted in Figure 2A, comprises a mold-press **22** for compression molding of thermosets and a spraying assembly **24.**

Mold-press **22** comprises a mold with a female upper mold part **26** having a downwardly facing female upper mold surface **28** and a male lower mold part **30** having an upwardly facing male lower mold surface **32.** Mold-press **22** is configured to close the mold to a closed state by moving upper mold part **26** down towards lower mold part **30,** and to open the mold to an open state by moving upper mold part **26** up and away from lower mold part **30.** In Figure 2A, the mold is depicted in an open state.

Spraying assembly **24** comprises a spraying booth **34** mounted on a spraying booth moving mechanism **36,** with an integrated electrostatic sprayer **38** (see Figures 2B and 2C), an evacuation assembly **40** and an excess PIMC resin powder container **42.**

Excess PIMC resin powder container **42** is an open-topped container accessible to spraying booth moving mechanism **36** for collecting recovered PIMC resin powder.

Spraying booth **34,** substantially an enclosure made of wood with an open upper aperture **44,** is schematically depicted from above in Figure 2B and in side cross section engaged with upper mold part **26** in Figure 2C.

Components of electrostatic sprayer **38** including nozzle **46** are seen inside of spraying booth **34.** Electrostatic sprayer **38** (e.g., a modified corona type spray gun) is integrated with and moves together with spraying booth **34.** Nozzle **46** of electrostatic sprayer **38** is contained inside spraying booth **34,** but is configured to move inside spraying booth **34** on X-Y table **48** in a controlled fashion (control wires not depicted) to evenly-apply PIMC resin powder to upper mold surface **28** when spraying booth **34** is engaged with upper mold part **26.**

Evacuation assembly **40** includes a pump (not depicted) configured to draw air from inside spraying booth **34** through duct **50** in fluid communication with the inside of spraying booth **34** and an air inlet **52** to allow air to enter the inside of spraying booth **34.** When the pump of evacuation assembly **40** is activated, PIMC resin powder suspended inside spraying booth **34** is evacuated from inside spraying booth **34** through duct **50** to be discarded or recovered.

Spraying booth **34** is configured to reversibly engage upper mold part **26** through upper aperture **44.** Upper aperture **44** of spraying booth **34** includes an outer rim **54** having a shape substantially similar to that of a mold seam area **56** of upper mold part **26.** Outer rim **54** is slightly smaller than mold seam area **56,** so that when spraying booth **34** engages upper mold part **26,** outer rim **54** is intimately encircled by mold seam area **56** and that a gap **58** between outer rim **54** and mold seam area **56** is an average of not more than about 0.1 mm. As a result, when spraying booth **34** engages upper mold part **26,** upper mold surface **28** is substantially isolated inside spraying booth **34** from mold seam area **56,** other components of PIMC device **20,** and the surroundings.

For use for preparing an item such as a component panel of an enclosure, mold-press **22** is prepared in the usual way. For example, the temperatures of the various components are set to the usual values for a desired PIMC resin powder and desired thermoset resin charge.

A charge of plastic thermoset resin (SMC or BMC, with or without reinforcing fibers, for example a thermoset including polyester) is placed on lower mold surface **32** of lower mold part **30** in the usual way. If necessary, fittings such as nuts, bolts and the like are placed in the appropriate positions on lower mold surface **32** of lower mold part **30.**

Spraying booth moving mechanism **36** is activated to substantially isolate upper mold surface **28** inside spraying booth **34,** substantially as depicted in Figure 2C, by engaging upper mold part **26** with spraying booth **34** so that outer rim **54** of upper aperture **44** of spraying booth **34** is intimately encircled by mold seam area **56** of upper mold part **26.**

While upper mold surface **28** is substantially isolated inside spraying booth **34,** electrostatic sprayer **38** is activated so thermoset PIMC resin powder (e.g., a PIMC resin powder comprising a polyester) is applied to upper mold surface **28** through nozzle **46.** Nozzle **46** applies the PIMC resin powder to only a part of upper mold surface **28** at any one time. X-Y table **48** is used to move nozzle **46** inside spraying booth **34** to ensure that PIMC resin powder is applied evenly to the entirety of upper mold surface **28.**

As discussed above, the isolation of upper mold surface **28** inside spraying booth **34** and the intimate encirclement of outer rim **54** of upper aperture **44** of spraying booth **34** by mold seam area **56** ensures that mold seam area **56** remains substantially clean of PIMC resin powder, and that substantially no PIMC resin powder contaminates components of PIMC device **20** or the surroundings.

Spraying booth moving mechanism **36** maintains spraying booth **34** engaged with upper mold part **26** for a required time (typically in the order of 5 to 10 seconds) to allow substantial partial curing of the applied PIMC resin powder on upper mold surface **28.** As a result, the applied PIMC resin powder melts, spreads to form a layer and begins to cure into a film while spraying booth **34** is still engaged with upper mold part **26.**

When a sufficient degree of substantial partial curing is achieved, spraying booth moving mechanism **36** disengages spraying booth **34** from upper mold part **26.** The disengaging cleanly tears the film of partially cured PIMC resin powder. As the PIMC resin powder is already partially cured, there is no migration of PIMC resin powder to mold seam area **56.** Spraying booth moving mechanism **36** withdraws spraying booth **34** from between upper mold part **26** and lower mold part **30** so as not to interfere with mold closing.

Mold-press **22** is activated in the usual way to close the mold, bringing upper mold surface **28** and lower mold surface **32** together, spreading the plastic thermoset resin charge in the usual way to fill the volume between upper mold surface **28** and lower mold surface **32** to form the desired item from the thermoset resin. While spreading, the upper part of the thermoset resin charge contacts the partially-cured applied PIMC resin powder on upper mold surface **28** in the usual way.

In the usual way, the mold is maintained in a closed state allowing the thermoset resin to cure and to react with the partially-cured PIMC resin powder on upper mold surface **28.** In the usual way, the layer of partially-cured PIMC resin powder becomes integrally formed with the thermoset resin to form a PIMC surface on the cured thermoset resin.

In the usual way, when the thermoset resin is substantially cured, the mold is opened by separating upper mold surface **28** from lower mold surface **32,** and the cured thermoset resin is removed from the mold as the desired thermoset item.

While spraying booth **34** is engaged with upper mold part **26** and during the application of PIMC resin powder to upper mold surface **28,** the pump of evacuation assembly **40** is operated. Air enters the inside of spraying booth **34** through air inlet **52** and is drawn into duct **50,** thereby evacuating excess PIMC resin powder resin from inside spraying booth **34.** In some embodiments, usually in accordance with operator discretion, evacuation is suspended when application of PIMC resin powder resin is completed. In some embodiments, usually in accordance with operator discretion, evacuation is continued during the period of time allowed for partial curing of the applied PIMC resin powder on the upper mold surface and suspended proximal to the time when it is desired to disengage spraying booth **34** from upper mold surface **28.**

While spraying booth **34** is engaged with upper mold part **26** and during the application of PIMC resin powder to upper mold surface **28,** excess PIMC resin powder that does not adhere to upper mold surface **28** and that is not evacuated by evacuation assembly **40** settles and accumulates at the bottom of spraying booth **34.** While the mold is closed, spraying booth moving mechanism **36** tips spraying booth **34** over excess PIMC resin powder container **42** so that excess PIMC resin powder falls thereinto to be collected.

In some not claimed embodiments, a spraying assembly such as **24** is devoid of an evacuation assembly such as **40.** In some such not claimed embodiments, excess PIMC resin powder settles and accumulates at the bottom of spraying booth **34,** and can be collected in an excess PIMC resin powder container such as **42.**

In the embodiment discussed above, spraying booth **34** remained engaged with upper mold part **26** for sufficient time allowing substantial partial curing so that the applied PIMC resin powder forms a film. In some not claimed embodiments, a spraying booth is disengaged from an upper mold part soon after application of the PIMC resin powder and prior to substantial partial curing of the applied PIMC resin powder.

In Figures 2, electrostatic sprayer **38** is integrated with spraying booth **34** and moves together with spraying booth **34** while nozzle **46** of electrostatic sprayer **38** is configured to move inside spraying booth **34** to evenly apply PIMC resin powder to upper mold surface **28** when engaged with upper mold part **26.**

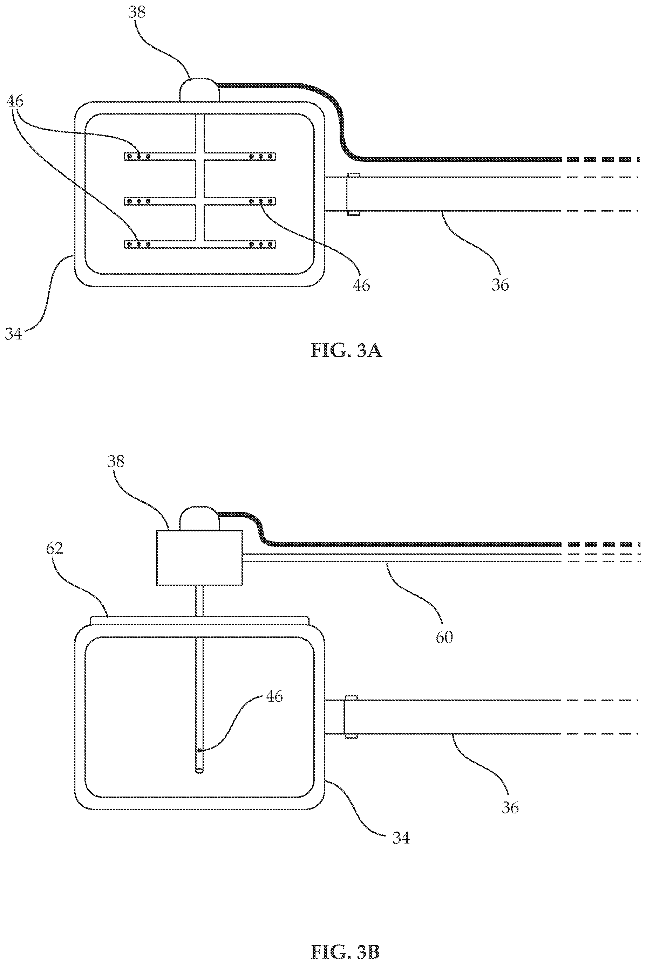

In some not claimed embodiments, such as depicted in Figure 3A, nozzles **46** of electrostatic sprayer **38** are fixed in position and static inside spraying booth **34,** but are arranged in a way to evenly apply PIMC resin powder to substantially the entire upper mold surface **28** substantially simultaneously when engaged with upper mold part **26.**

In some not claimed embodiments, such as depicted in Figure 3B, electrostatic sprayer **38** is separate from spraying booth **34,** but is configured to move into and out of spraying booth **34** for application of PIMC resin powder. In Figure 3B, electrostatic sprayer **38** is mounted on an independent robot arm **60.** When spraying booth **34** is engaged with an upper mold part **26,** robot arm **60** maneuvers nozzle **46** of electrostatic sprayer **38** into spraying booth **34** through an elongated window **62** in the side of spraying booth **34** sealed with a brush seal and moves nozzle **46** inside spraying booth **34** to evenly apply PIMC resin powder to upper mold surface **28.** When application of PIMC resin powder is complete, robot arm **60** withdraws nozzle **46** from spraying booth **34** out through window **62.**

In the embodiments depicted above, spraying booth **34** and electrostatic sprayer **38** are mounted on robots to automatically or semi-automatically, quickly and accurately engage spraying booth **34** with upper mold part **26** for the required length of time and to control electrostatic sprayer **38** to evenly apply PIMC resin powder to upper mold surface **28.** In some not claimed embodiments, other mechanisms are used to engage a spraying booth with an upper mold part and to control an electrostatic sprayer.

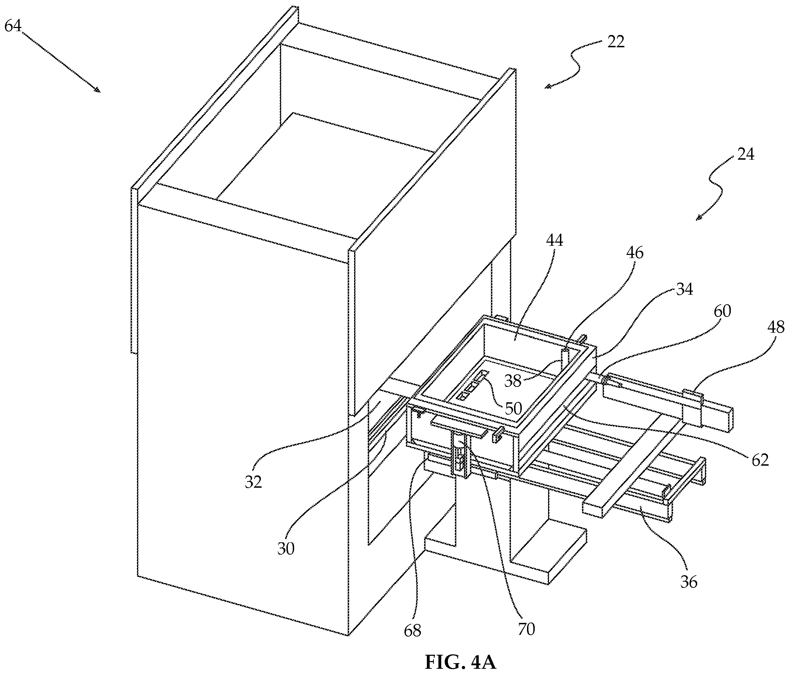

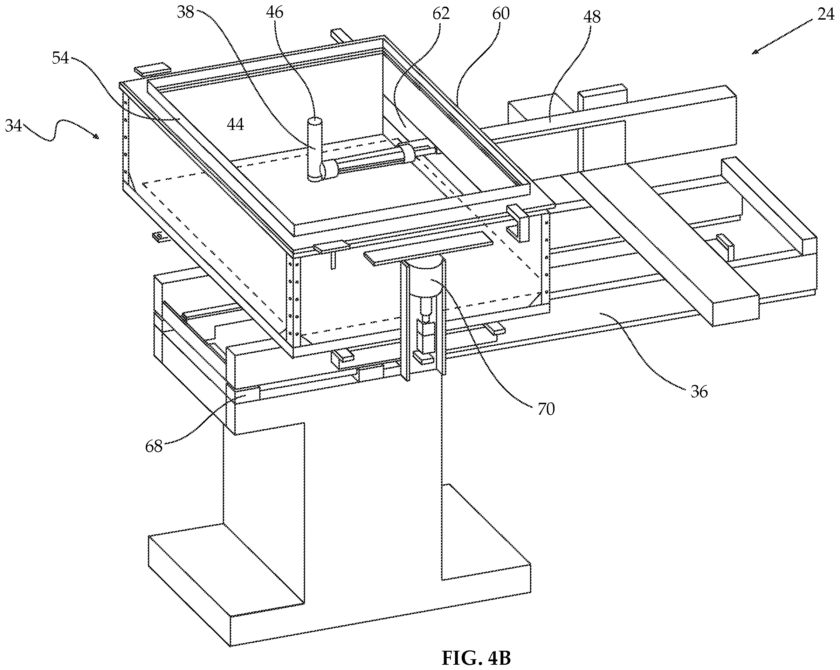

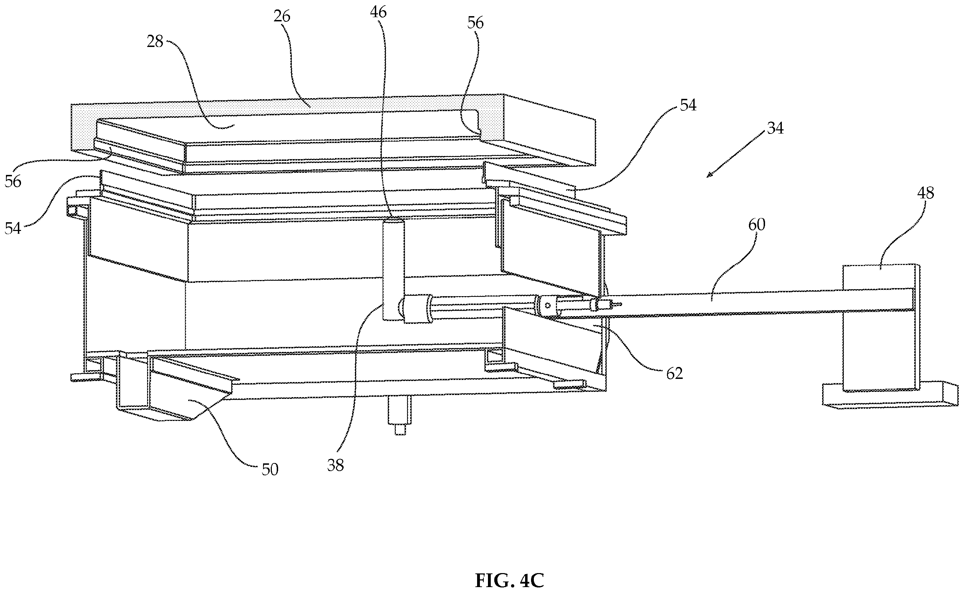

An additional PIMC device useful for implementing some embodiments of the method, PIMC device **64,** is schematically depicted in Figures 4A, 4B and 4C.

PIMC device **64,** substantially entirely depicted in Figure 4A, comprises a mold-press **22** for compression molding of thermosets and a spraying assembly **24.**

Like in PIMC device **20** discussed above, mold-press **22** comprises a mold with a female upper mold part **26** having a downwardly facing upper mold female surface **28** (not depicted) and a male lower mold part **30** having an upwardly facing lower mold male surface **32.** In Figure 4A, the mold is depicted in an open state.

Spraying assembly **24,** schematically depicted in detail in Figures 4B and 4C, comprises a spraying booth **34** mounted on a spraying booth moving mechanism **36,** with an integrated electrostatic sprayer **38** and a duct **50** of an evacuation assembly.

Spraying booth **34,** substantially an enclosure made of wood with an open upper aperture **44,** is schematically depicted (with a side cut out) in Figure 4C in proximity of upper mold part **26.**

Spraying booth moving mechanism **36** is configured to move spraying booth **34** between upper mold part **26** and lower mold part **30** by sliding spraying booth **34** like a drawer along rails **68.** Once upper aperture **44** is properly positioned below mold seam area **56** of upper mold part **26,** actuators **70** lift spraying booth **34** upwards, thereby engaging upper mold part **26** with spraying booth **34** so that outer rim **54** of upper aperture **44** is intimately encircled by mold seam area **56** of upper mold surface **28,** substantially isolating upper mold surface **28** inside spraying booth **34.**

Components of electrostatic sprayer **38** including nozzle **46** are seen inside of spraying booth **34.** Electrostatic sprayer **38** is integrated with and moves together with spraying booth **34.** Electrostatic sprayer **38** is mounted on X-Y table **48** which is outside spraying booth **34.** Nozzle **46** of electrostatic sprayer **38,** mounted on arm **60,** is contained inside spraying booth **34.** Arm **60** of electrostatic sprayer **38** passes through elongated window **62** (sealed, for example, with a brush seal (not depicted)) on the side of spraying booth **34** into spraying booth **34.** X-Y table **48** is under control of a robot (control wires not depicted) to evenly apply PIMC resin powder to upper mold surface **28** when spraying booth **34** is engaged with upper mold part **26.**

The evacuation assembly includes a pump configured to draw air from inside spraying booth **34** through duct **50.**

Spraying booth **34** is configured to reversibly engage upper mold part **26** through upper aperture **44.** Upper aperture **44** includes an outer rim **54** having a shape substantially similar to that of mold seam area **56** of upper mold part **26.** Outer rim **54** is slightly smaller than mold seam area **56,** so that when spraying booth **34** and upper mold part are engaged, outer rim **54** is intimately encircled by mold seam area **56.** As a result, when spraying booth **34** is engaged with upper mold part **26,** upper mold surface **28** is substantially isolated inside spraying booth **34** from mold seam area **56,** other components of PIMC device **64** and the surroundings.

Implementation of embodiments of the method of the invention using PIMC device **64** is substantially analogous to the described hereinabove.

### Not claimed embodiment of a spraying booth

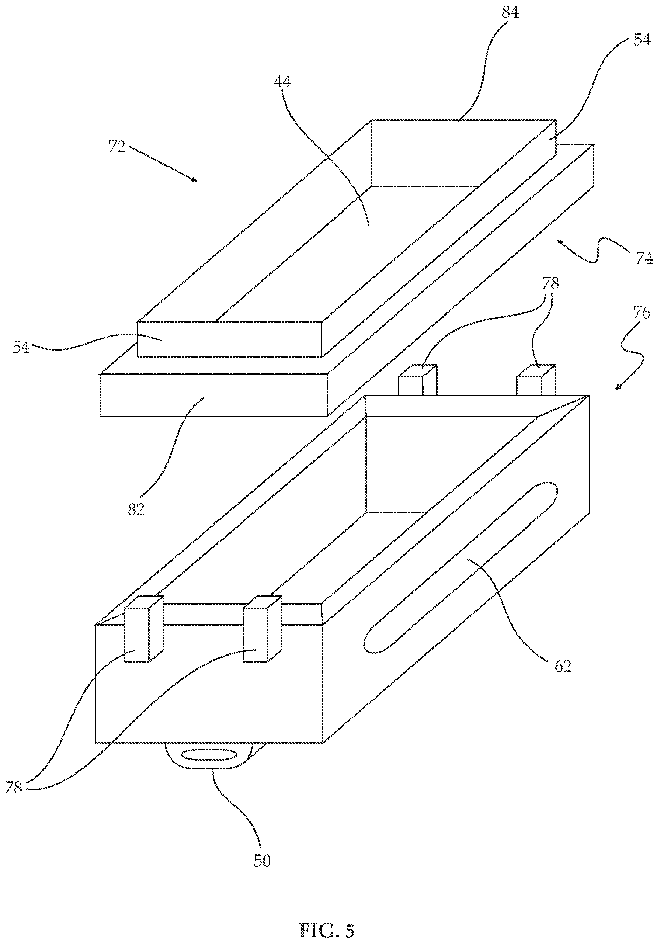

In some not claimed embodiments , a spraying booth as described herein comprises two parts: a lower enclosure part and an upper aperture part which are substantially immovably engaged to constitute the spraying booth. Such an embodiment is depicted in Figure 5, spraying booth **72** comprising an upper aperture part **74** and a lower enclosure part **76** including clips **78** configured to reversibly substantially immovably engage upper aperture part **74** to lower enclosure part **76.**

A lower enclosure part such as **76** is substantially an open-topped box including other components of the spraying booth as described above including components such as duct **50,** elongated window **62,** brush seals, components of an electrostatic sprayer and the like. A lower enclosure part such as **76** is also configured to substantially immovably engage an upper aperture part such as **74** to the open top of the lower enclosure part, for example, with the help of clips **78.**

The upper aperture part such as **74** is substantially a frame **82** having a size and shape that matches the open top of the lower enclosure part and is substantially immovably engageable to the lower enclosure part. An upper aperture part defines an outer rim **54** having a size and shape to be intimately encircled by a mold seam area of a respective upper mold surface.

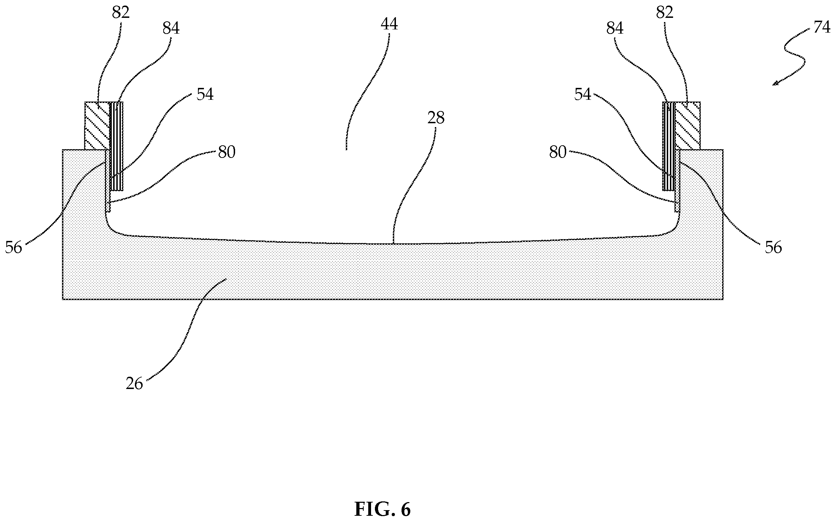

One stage of a not claimed embodiment of making an outer rim **54** of an aperture **44** of an upper aperture part **74** of a spraying booth such as **72** is schematically depicted in Figure 6. A female upper mold part **26** is placed upside-down so that an upper female mold surface **28** faces upwards. A mold seam area **56** is covered with a thin (having a thickness corresponding to the desired gap **58,** e.g., not more than about 0.2 mm, not more than about 0.15 mm and in some embodiments even not more than about 0.1 mm thick) protective layer **80** (for example of sheet wax available, for example, from Freeman Mfg. and Supply Co., OH, USA). A frame **82** (e.g., of wood) is set on top of upper mold part **26,** frame **82** defining an aperture approximately (preferably slightly larger) that of the circumference of mold seam area **56.** Sheets of a material **84** (see below) that adhere to frame **82** but not to protective layer **80** are adhered to the inner part of the aperture of frame **82** and covering protective layer **80** around the entire circumference of mold seam area **56** to define an incipient outer rim **54** of upper aperture **44** of the spraying booth. Sufficient sheets are placed (depending in the nature if the sheets, e.g., to a thickness of between about 2 mm and about 10 mm) so that the produced outer rim **54** will be sufficiently strong. For example, in some embodiments, the sheets of material are adhesive curable sheets such as air-curable epoxy-impregnated glass fiber sheets.

When outer rim **54** is completed (e.g., if applicable, the curable sheets making up the incipient outer rim have cured to constitute a completed rim) the thus-made upper aperture part **74** (comprising frame **82** and cured sheets **84)** is separated from upper mold part **26.** Upper mold part **26** is cleaned of protective layer **80.**

The thus-made upper aperture part **74** is then substantially immoveable engaged to a lower enclosure part. For example, in some embodiments, the upper mold part is properly placed in a mold press (upper mold surface facing downwards), the lower enclosure part is properly secured to the respective spraying booth moving mechanism and the upper aperture part is loosely placed on the open top of the lower enclosure part. The spraying booth moving mechanism is activated to slowly bring the lower enclosure part and upper aperture part to proximity with and to engage the upper mold part. The position of the upper aperture part is adjusted so that the outer rim of the upper aperture part is intimately encircled by the mold seam area of the upper mold surface. While the outer rim is intimately encircled by the mold seam area of the upper mold, the upper aperture part is substantially immoveable engaged to the lower enclosure part.

### Mold seam area and venting channels

One of the challenges in PIMC in compression molding of thermosets relates to venting channels. When a mold closes on a charge of plastic thermoset resin, the plastic thermoset resin spreads to fill the volume between the upper and lower mold surfaces. Air trapped between the mold parts is displaced by the spreading resin and either escapes or is compressed inside the resin, producing defects.

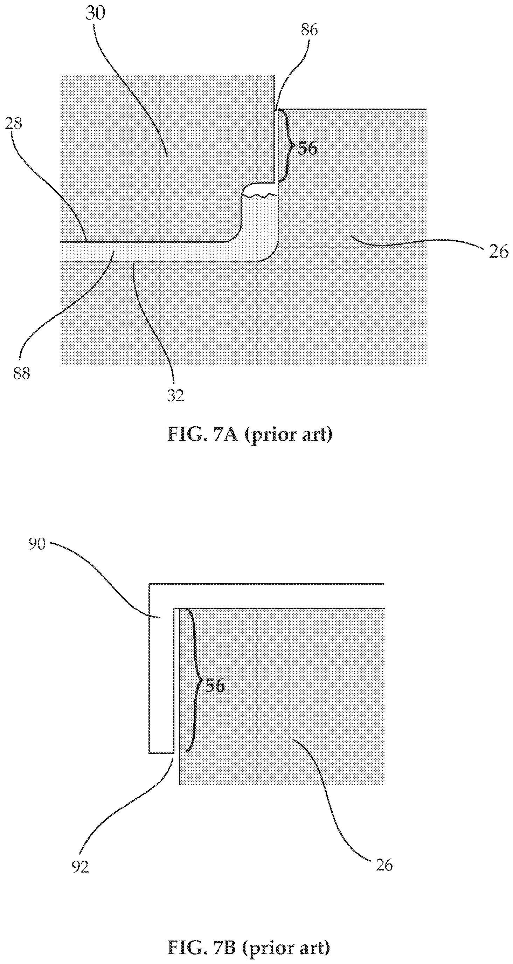

A prior art mold design is depicted in cross section in Figures 7A and 7B, including an upper male mold part **30** and a lower female mold part **26** where the gap (e.g., 0.05 mm) between mold parts **26** and **30** constitutes a venting channel **86.** When the mold is brought to a closed state, the thermoset resin charge **88** spreads, displacing air outwards through venting channel **86.** As depicted in Figure 7B, when applying PIMC to such a mold, it is known to place a mask **90** on top of lower female mold part **26** to cover mold seam area **56** while applying PIMC resin powder. Despite the use of mask **90,** at least some PIMC resin powder is attracted upwards into a gap **92** between the outer rim of mask **90** and seam area **56.** During closure of the mold, some of the PIMC layer is mechanically sheared off and blocks venting channel **86.**

A possible solution (recommended, for example, in "Framework and process guidelines for Powder in-Mould Coating" dated October 2004 by Synres-Almoco bv, a subsidiary of Raschig GmbH, Hoek van Holland, The Netherlands) is to increase the size of the venting channel in the region where the PIMC is applied (bordering the mold seam area), typically to between about 0.5 mm to about 0.7 mm. The increase of size allows some PIMC to enter the venting channel without blocking the venting channel. Such a solution is inappropriate when the upper mold part is female: in some instances spreading resin drips downwards due to the force of gravity, blocking the large venting channel. Further, such a solution is inappropriate when the spreading resin includes reinforcing fibers: a venting channel larger than about 0.3 mm allows entry of the reinforcing fibers into the flash formed inside the venting channels. It then becomes very difficult and expensive to remove the flash.

Some embodiments described herein, especially some embodiments where PIMC resin powder is applied to an upper mold surface, especially an upper female mold surface, overcome some of the challenges associated with venting channels.

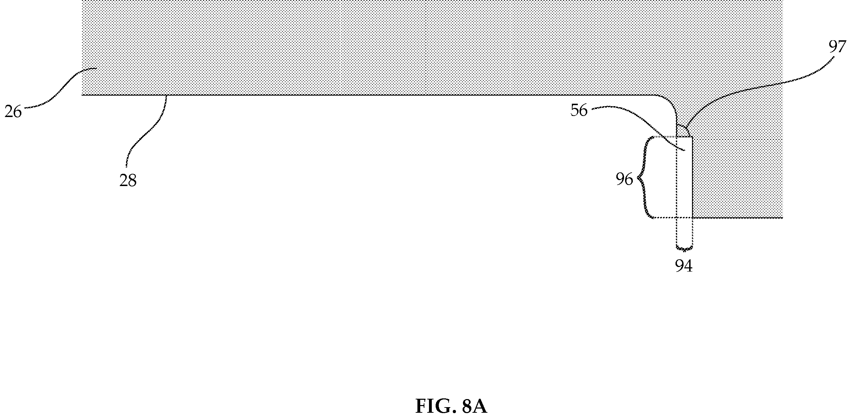

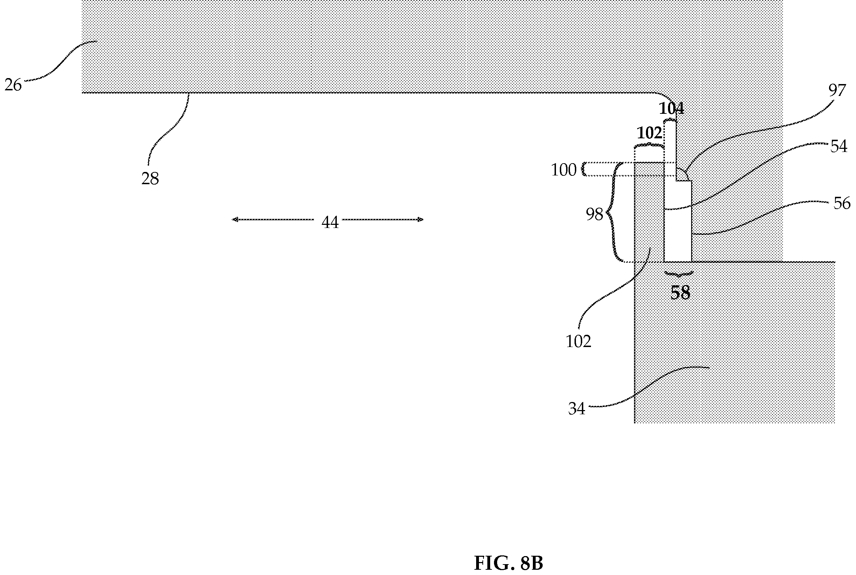

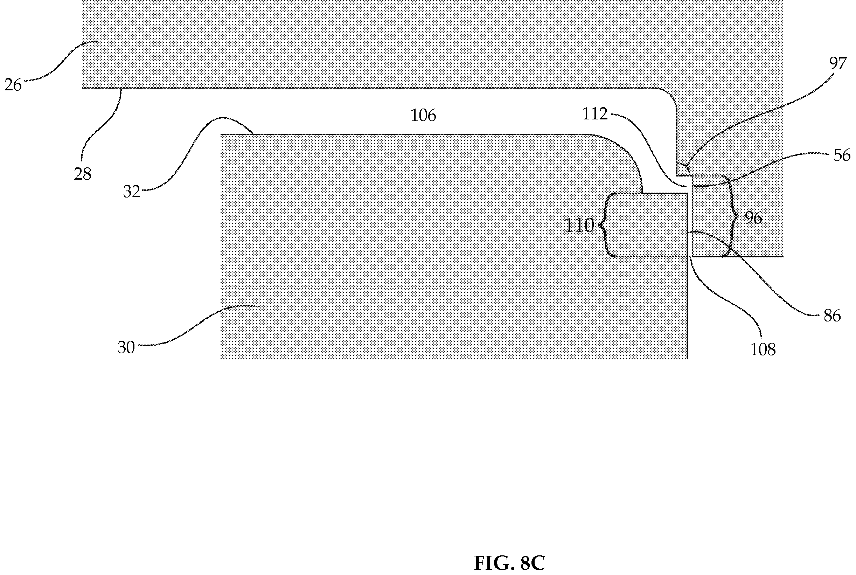

Such a not claimed embodiment is depicted in Figures 8A, 8B and 8C. It is important to note that, for clarity, some features are not drawn to scale. The actual scale of the various features is clear to a person having ordinary skill in the art upon perusing the accompanying description.

In Figure 8A is schematically depicted in cross section a portion of an embodiment of a female upper mold part **26,** including a downwardly facing upper mold surface **28** and a mold seam area **56.** Mold seam area **56** has a diameter slightly larger than that of the adjacent upper mold surface **28,** the difference **94** typically between about 0.03 mm and about 0.07 mm, in some embodiments between about 0.04 mm and about 0.06 mm, in some embodiments about 0.05 mm. Height **96** of the larger diameter portion of mold seam area **56** is any suitable height, typically between about 10 mm and about 30 mm, in the embodiment depicted in Figure 8A being 20.5 mm.

In some embodiments, such as the embodiment depicted in Figure 8A, the mold seam area is discontinuous with the female mold surface. In some embodiments, the discontinuity is greater than about 70°, in some embodiments greater than about 80°, and in some embodiments, the discontinuity is even greater than about 85°. In the embodiment depicted in Figure 8A, discontinuity **97** is about 90°.

In some embodiments, such as the embodiment depicted in Figure 8A, the mold seam area adjacent to the female mold surface is substantially parallel (in some embodiments, within 5% of parallel) to the mold axis (the axis along which the mold parts move together and apart).

In Figure 8B, upper female mold part **26** is depicted engaged with spraying booth **34** where outer rim **54** of aperture **44** of spraying booth **34** is intimately encircled by mold seam area **56** of upper mold part **26.** Gap **58** between outer rim **54** and mold seam area **56** is not more than about 0.2 mm (in Figure 8B, about 0.1 mm). The height **98** of outer rim **54** is slightly greater than the height of mold seam area **56,** typically the difference **100** being between about 0.2 mm and about 1.5 mm (in Figure 8B, about 0.5 mm). Protrusion **102** of spraying booth **34** that defines outer rim **54** is thick enough to be sufficiently strong, typically between about 2mm and about 10 mm (in Figure 8B, about 5 mm).

As height **98** of outer rim **54** is greater than that of mold seam area **56,** a part of outer rim **54** protrudes beyond mold seam area **56** (in Figure 8B, by about 0.5 mm) and defines a gap **104** (in Figure 8B of about 0.05 mm) between upper mold surface **28** and outer rim **54.**

When PIMC resin powder is applied to upper mold surface **28** when engaged with spraying booth **34** as depicted in Figure 8B, PIMC resin powder is electrostatically attracted to exposed portions of upper mold surface **28.** When the PIMC resin powder is approximately the same or smaller than gap **104,** some PIMC resin powder also enters gap **104** in between upper mold surface **28** and the upper portion of outer rim **54.** For example, when gap **104** is about 0.05 mm as in Figure 8B, fine PIMC resin powder (for example 0.05 mm diameter powder that produces a fine PIMC finish) is attracted thereinto to cover the masked portions of upper mold surface **28** without substantial deposition of PIMC resin powder on mold seam area **56.** In some not claimed embodiments the height of the outer rim of the spraying booth is such that when the spraying booth and female mold part are engaged, a portion of the female mold surface is masked by the outer rim of the spraying booth (in some embodiments, the portion being between about 0.2 mm and about 1.5 mm high, in Figure 8B about 0.5 mm), thereby assisting in preventing substantial PIMC resin powder deposition on the mold seam area, even though PIMC resin powder is deposited on substantially the entire female mold surface: sufficient PIMC resin powder is drawn by electrostatic attraction to cover the portion of the female mold surface masked by the outer rim of the spraying booth. In some not claimed embodiments the degree of discontinuity of the mold seam area with the female mold surface (as discussed above, in some not claimed embodiments, greater than about 70°, in some embodiments greater than about 80°, and in some embodiments, greater than about 85°) of the female mold prevents applied PIMC resin powder from being electrostatically drawn past the discontinuity to the mold seam area. Without wishing to be held to any one theory, it is believed that in some not claimed embodiments the degree of discontinuity together with the masking of a portion of the female mold surface by the outer rim of the spraying booth assist in preventing substantial deposition of PIMC resin powder on the mold seam area. In some not claimed embodiments the size of the gap between the female mold surface and the outer rim of the spraying booth (in Figure 8B, gap 104 is about 0.05 mm; in some embodiments the gap is not greater than about 0.2 mm, in some not claimed embodiments not greater than about 0.15 mm, in some embodiments not greater than about 0.1 mm) makes passage of applied PIMC resin powder into the gap difficult. Applied PIMC resin powder drawn by electrostatic attraction into the volume between the outer rim of the spraying booth and the female mold surface is initially deposited close to the upper tip of the outer rim, constituting a bottleneck to the passage of additional PIMC resin powder subsequently applied. In some such not claimed embodiments such a bottleneck assists in preventing substantial deposition of PIMC resin powder on the mold seam area. In some not claimed embodiments the size of the gap between the female mold surface and the outer rim of the spraying booth together with the masking of a portion of the female mold surface by the outer rim of the spraying booth assist in preventing substantial deposition of PIMC resin powder on the mold seam area. In some not claimed embodiments the size of the gap between the female mold surface and the outer rim of the spraying booth together with the degree of discontinuity of the mold seam area with the female mold surface assist in preventing substantial deposition of PIMC resin powder on the mold seam area. In some not claimed embodiments the size of the gap between the female mold surface and the outer rim of the spraying booth together with the masking of a portion of the female mold surface by the outer rim of the spraying booth and together with the masking of a portion of the female mold surface by the outer rim of the spraying booth assist in preventing substantial deposition of PIMC resin powder on the mold seam area.

As discussed above, depending on the embodiment, subsequent to application of a PIMC resin powder layer spraying booth **34** is disengaged from upper mold part **26** before substantial curing of the deposited PIMC resin powder or after substantial curing of deposited PIMC resin powder.

In Figure 8C, the mold comprising upper mold part **26** and lower mold part **30** is depicted in a closed state. Volume **106** in which thermoset resin is molded is seen between upper mold surface **28** and lower mold surface **32.** The diameter of lower mold surface **32** is slightly smaller than the diameter of mold seam area **56** of upper mold part **26** so that the gap between mold parts **26** and **30** constitutes a venting channel **86.** Width **108** of venting channel is generally less than about 0.2 mm and even less than about 0.1 mm (in Figure 8C, about 0.05 mm). Penetration **110** of lower mold part **30** into upper mold part **26** (as determined by the mold press mechanism) is slightly less than height **96** of mold seam area **56** to define an "inlet" **112** into venting channel **86,** generally less by between about 0.2 mm and about 0.8 mm (in Figure 8C, penetration **110** is about 20 mm while height **96** is about 20.5 mm so that the height difference ("inlet" **112)** is about 0.5 mm). As a result, venting channel **86** remains clear and unobstructed during molding.

In some not claimed embodiments, such as the embodiment depicted in Figure 8C, no substantial part of the female mold on which PIMC resin powder is applied is a part of venting channel **86.** As a result, venting channel **86** remains clear and unobstructed. In some embodiments, this allows venting channel **86** to be sufficiently small so that few if any reinforcing fibers present in the thermoset resin charge are found in the flash, making flash removal of molded item simple.

In some not claimed embodiments, such as depicted in Figure 8C, "inlet" **112** into venting channel **86,** defined by discontinuity **97** of mold seam area **56** with female mold surface **28,** the periphery of male mold surface **32** and penetration **110** of male mold part **30** into female mold part **28** is at an angle greater than greater than about 70° (in some embodiments greater than about 80°, and in some not claimed embodiments, greater than about 85°, in Figure 8C about 90°) to the mold axis.

### Female Mold Part

Mold parts are traditionally made of either steel or nickel-coated aluminum. There are many advantages for having mold parts of nickel-coated aluminum (for example, the thermal expansion coefficient of aluminum, unlike steel, is very similar to that of fiber-reinforced polyester) it is exceptionally advantageous to have an upper (moving) mold part of aluminum. As an aluminum mold part is lighter than a steel mold part, the press that moves the mold part is smaller and lighter and replacement of the aluminum mold part is much simpler.

However, nickel-coated aluminum mold parts are of limited use for the compression molding of fiber-reinforced thermosets. During compression molding, the glass fibers slowly abrade the protective nickel layer exposing the aluminum metal. Titanium oxide that is commonly present in thermoset resin compositions chemically reacts with the aluminum, reducing the lifetime of the mold part.

It has been found that when implementing the teachings of the invention, it is possible to extend the lifetime of the upper female mold part. It is currently believed that the applied PIMC layer protects the nickel surface of the mold from abrasion and/or contact with titanium oxide in the thermoset resin.

Although the invention has been described in conjunction with specific embodiments thereof, it is evident that many alternatives, modifications and variations within the scope of invention as defined in the appended claims will be apparent to those skilled in the art. Accordingly, it is intended to embrace all such alternatives, modifications and variations that fall within the scope of the appended claims.

## Claims

1. A method for making an item in a mold-press, comprising:
a) substantially isolating an upper mold surface of an upper mold part of the mold-press inside a PIMC spraying booth by engaging said upper mold part with said spraying booth so that an outer rim of an aperture of said spraying booth is intimately encircled by a mold seam area of said upper mold surface;
b) while said upper mold surface is substantially isolated inside said spraying booth, electrostatically applying a layer of PIMC resin powder to said upper mold surface;
c) disengaging said spraying booth from said upper mold part so as not to interfere with mold closing;
d) placing a charge of plastic thermoset resin on a lower mold surface of a lower mold part of the mold-press;
e) activating the mold-press to close said mold, bringing said upper mold surface and said lower mold surface together so as to spread said plastic thermoset resin charge to fill the volume between said upper and lower surfaces of said mold and to contact said applied PIMC resin powder with a surface of said plastic thermoset resin charge;
f) subsequent to 'e', allowing said spread thermoset resin to cure, opening said mold to separate the upper and lower mold surfaces, and removing said cured thermoset resin as the item.

2. The method of claim 1, wherein the gap between said outer rim of said aperture of said spraying booth and said mold seam area of said upper mold part is an average of not more than about 0.2 mm while said upper mold surface is substantially isolated inside said spraying booth.

3. The method of any of claims 1 to 2, further comprising, prior to the activation of the mold-press to close said mold, placing fittings on said lower mold surface.

4. The method of any of claims 1 to 3, further comprising, while said spraying booth engages said upper mold part, evacuating excess PIMC resin powder from said spraying booth.

5. The method of any of claims 1 to 4, prior to the spreading of said plastic thermoset resin charge, allowing the applied PIMC resin powder to at least partially cure on said upper mold surface.

6. The method of any of claims 1 to 5, wherein said charge of plastic thermoset resin is selected from the group consisting of thermoset polyesters, epoxy, acrylics, polyphenols, triglycidyl isocyanurate (TGIC) polyester and urethane polyester.

7. The method of any of claims 1 to 6, wherein said PIMC resin powder is selected from the group consisting of epoxy, polyester, polyester TGIC, epoxy-polyester hybrids, urethane polyester, polyvinylidene fluoride, acrylic, polyvinyl chloride, polyolefins and nylon.

8. A PIMC device, comprising:
a) a mold-press suitable for compression molding of thermosets including a mold having least two mold parts:
i. an upper mold part with an upper mold surface; and
ii. a lower mold part with a lower mold surface
said mold-press configured to close said mold by moving said upper mold part and said lower mold part together to a closed state and apart to an open state;
b) a PIMC spraying booth configured to reversibly engage said upper mold part, so that when said spraying booth engages said upper mold part an outer rim of an aperture of said spraying booth is intimately encircled by a mold seam area of said upper mold surface so as to substantially isolate said upper mold surface inside said spraying booth; and
c) an electrostatic sprayer with at least one nozzle configured for electrostatic application of PIMC resin powder to said upper mold surface when substantially isolated inside said spraying booth.

9. The device of claim 8, wherein when said upper mold surface is substantially isolated inside said spraying booth, the gap between said outer rim of said aperture of said spraying booth and said mold seam area of said upper mold part is an average of not more than about 0.2 mm.

10. The device of any of claims 8 to 9, further comprising a spraying booth moving mechanism, configured to move said spraying booth to engage said upper mold part, to maintain said spraying booth engaged for a sufficient time and to disengage said spraying booth from said upper mold part.

11. The device of any of claims 8 to 10, wherein said at least one nozzle is configured to apply a substantially even coating of PIMC resin powder to substantially the entire said upper mold surface substantially simultaneously when said spraying booth is engaged with said upper mold part.

12. The device of any of claims 8 to 10, wherein said at least one nozzle is configured to move inside said spraying booth when said spraying booth is engaged with said upper mold part, allowing application of a substantially even coating of PIMC resin powder to substantially the entire said upper mold surface.

13. The device of any of claims 8 to 12, said at least one nozzle configured to move in and out of said spraying booth.

14. The device of any of claims 8 to 12, said at least one nozzle contained inside said spraying booth.

15. The device of any of claims 8 to 14, further comprising a PIMC resin powder evacuation assembly functionally associated with said spraying booth, configured for evacuating PIMC resin powder suspended inside said spraying booth when the spraying booth is engaged with said upper mold part.

## Patentansprüche

1. Verfahren zur Herstellung eines Artikels in einer Formpresse, umfassend:
a) im Wesentlichen Isolieren einer oberen Formoberfläche eines oberen Formteils der Formpresse in einer PIMC-Sprühkabine durch Eingriff des oberen Formteils mit der Sprühkabine, so dass ein äußerer Rand einer Öffnung der Sprühkabine eng umgeben ist von einem Formgratbereich der oberen Formoberfläche;
b) während die obere Formoberfläche im Wesentlichen in der Sprühkabine isoliert ist, elektrostatisches Auftragen einer Schicht eines PIMC-Harzpulvers auf die obere Formoberfläche;
c) Ausrücken der Sprühkabine von dem oberen Formteil, um den Formverschluss nicht zu beeinträchtigen;
d) Platzieren einer Charge wärmehärtendes Kunststoffharz auf einer unteren Formoberfläche eines unteren Formteils der Formpresse;
e) Aktivieren der Formpresse, um die Form zu schließen, wobei die obere Formoberfläche und die untere Formoberfläche zusammengeführt werden, um die Charge wärmehärtendes Kunststoffharz auszubreiten, um das Volumen zwischen der oberen und der unteren Oberfläche der Form zu füllen und um das aufgetragene PIMC-Harzpulver in Kontakt mit einer Oberfläche der Charge des wärmehärtenden Kunststoffharzes zu bringen;
f) nach Schritt e) Aushärten lassen des ausgebreiteten wärmehärtenden Harzes, Öffnen der Form, um die obere und untere Formoberfläche zu separieren und Entfernen des gehärteten wärmehärtenden Harzes als den Artikel.

2. Verfahren nach Anspruch 1, wobei der Spalt zwischen dem äußeren Rand der Öffnung der Sprühkabine und dem Formgratbereich des oberen Formteils durchschnittlich nicht größer ist als etwa 0,2 mm, wobei die obere Formoberfläche im Wesentlichen in der Sprühkabine isoliert ist.

3. Verfahren nach Anspruch 1 oder 2, ferner umfassend vor der Aktivierung der Formpresse zum Schließen der Form das Platzieren von Formstücken an der unteren Formoberfläche.

4. Verfahren nach einem der Ansprüche 1 bis 3, ferner umfassend während dem Eingriff zwischen der Sprühkabine und dem oberen Formteil das Entleeren von überschüssigem PIMC-Harzpulver aus der Sprühkabine.

5. Verfahren nach einem der Ansprüche 1 bis 4, wobei vor dem Ausbreiten der Charge wärmehärtenden Kunststoffharzes das aufgetragene PIMC-Harzpulver teilweise auf der oberen Formoberfläche aushärten kann.

6. Verfahren nach einem der Ansprüche 1 bis 5, wobei die Charge wärmehärtendes Kunststoffharz ausgewählt ist aus der Gruppe bestehend aus duroplastischem Polyester, Epoxy, Acrylen, Polyphenolen, Triglycidylisocyanurat (TGIC) Polyester und Urethanpolyester.

7. Verfahren nach einem der Ansprüche 1 bis 6, wobei das PIMC-Harzpulver ausgewählt ist aus der Gruppe bestehend aus Epoxy, Polyester, Polyester-TGIC, Epoxy-Polyester-Hybriden, Urethanpolyester, Polyvinylidenfluorid, Acryl, Polyvinylchlorid, Polyolefinen und Nylon.

8. PIMC-Vorrichtung, umfassend:
a) eine Formpresse, die sich zum Formpressen von Duroplasten eignet, mit einer Form mit wenigstens zwei Formteilen:
i) einem oberen Formteil mit einer oberen Formoberfläche; und
ii) einem unteren Formteil mit einer unteren Formoberfläche,
wobei die Formpresse so gestaltet ist, dass sie die Form schließt, indem der obere Formteil und der untere Formteil an einen geschlossenen Zustand zusammen und an einen offenen Zustand auseinander bewegt werden;
b) eine PIMC-Sprühkabine, die so gestaltet ist, dass sie umkehrbar mit dem oberen Formteil eingreift, so dass, wenn die Sprühkabine mit dem oberen Formteil eingreift, ein äußerer Rand einer Öffnung der Sprühkabine eng umgeben ist von einem Formgratbereich der oberen Formoberfläche, so dass die obere Formoberfläche in der Sprühkabine im Wesentlichen isoliert ist; und
c) eine elektrostatische Sprühvorrichtung mit wenigstens einer Düse, die gestaltet ist für ein elektrostatisches Auftragen von PIMC-Harzpulver auf die obere Formoberfläche, wenn sie im Wesentlichen in der Sprühkabine isoliert ist.

9. Vorrichtung nach Anspruch 8, wobei, wenn die obere Formoberfläche im Wesentlichen in der Sprühkabine isoliert ist, der Spalt zwischen dem äußeren Rand der Öffnung der Sprühkabine und dem Formgratbereich des oberen Formteils durchschnittlich nicht größer ist als etwa 0,2 mm.

10. Vorrichtung nach Anspruch 8 oder 9, ferner umfassend einen Sprühkabinen-Bewegungsmechanismus, der so gestaltet ist, dass er die Sprühkabine wie folgt bewegt: für einen Eingriff mit dem oberen Formteil, um den Eingriff der Sprühkabine über einen ausreichenden Zeitraum aufrechtzuerhalten und um die Sprühkabine von dem oberen Formteil auszurücken.

11. Vorrichtung nach einem der Ansprüche 8 bis 10, wobei die wenigstens eine Düse so gestaltet ist, dass sie einen im Wesentlichen gleichmäßigen Überzug von PIMC-Harzpulver auf im Wesentlichen die gesamte obere Formoberfläche gleichzeitig aufträgt, wenn die Sprühkabine mit dem oberen Formteil eingreift.

12. Vorrichtung nach einem der Ansprüche 8 bis 10, wobei die wenigstens eine Düse so gestaltet ist, dass sie in der Sprühkabine bewegt, wenn die Sprühkabine mit dem oberen Formteil eingreift, was das Auftragen eines im Wesentlichen gleichmäßigen Überzugs von PIMC-Harzpulver auf im Wesentlichen die gesamte obere Formoberfläche ermöglicht.

13. Vorrichtung nach einem der Ansprüche 8 bis 12, wobei die wenigstens eine Düse so gestaltet ist, dass sie sich in die Sprühkabine und aus der Sprühkabine heraus bewegt.

14. Vorrichtung nach einem der Ansprüche 8 bis 12, wobei die wenigstens eine Düse sich in der Sprühkabine befindet.

15. Vorrichtung nach einem der Ansprüche 8 bis 14, ferner umfassend eine Entleerungsanordnung für PIMC-Harzpulver, die funktionell der Sprühkabine zugeordnet ist, wobei die Anordnung gestaltet ist, um in der Sprühkabine freischwebendes PIMC-Harzpulver zu entleeren, wenn die Sprühkabine mit dem oberen Formteil eingreift.

## Revendications

1. Procédé pour fabriquer un article dans une presse de moulage, comprenant les étapes consistant à :
a) isoler sensiblement une surface de moule supérieure d'une partie de moule supérieure de la presse de moulage à l'intérieur d'une cabine de pulvérisation PIMC en mettant en prise ladite partie de moule supérieure avec ladite cabine de pulvérisation de sorte qu'un bord externe d'une ouverture de ladite cabine de pulvérisation soit intimement encerclé par une zone de joint de moule de ladite surface de moule supérieure ;
b) tandis que ladite surface de moule supérieure est sensiblement isolée dans ladite cabine de pulvérisation, appliquer de manière électrostatique une couche de poudre de résine PIMC sur ladite surface de moule supérieure ;
c) dissocier ladite cabine de pulvérisation de ladite partie de moule supérieure de sorte à ne pas interférer avec la fermeture du moule ;
d) placer une charge de résine thermodurcissable plastique sur une surface de moule inférieure d'une partie de moule inférieure de la presse de moulage ;
e) activer la presse de moulage pour fermer ledit moule, réunissant ladite surface de moule supérieure et ladite surface de moule inférieure de sorte à diffuser ladite charge de résine thermodurcissable plastique pour remplir le volume entre lesdites surfaces supérieure et inférieure dudit moule et à mettre en contact ladite poudre de résine PIMC appliquée avec une surface de ladite charge de résine thermodurcissable plastique ;
f) après l'étape « e », laisser ladite résine thermodurcissable diffusée durcir, ouvrir ledit moule pour séparer les surfaces de moule inférieure et supérieure, et retirer ladite résine thermodurcissable durcie en tant qu'article.

2. Procédé selon la revendication 1, l'écart entre ledit bord externe de ladite ouverture de ladite cabine de pulvérisation et ladite zone de joint de moule de ladite partie de moule supérieure étant en moyenne inférieure à 0,2 mm lorsque ladite surface de moule supérieure est sensiblement isolée dans ladite cabine de pulvérisation.

3. Procédé selon l'une quelconque des revendications 1 à 2, comprenant en outre l'étape consistant à, avant l'activation de la presse de moulage pour fermer ledit moule, placer des raccords sur ladite surface de moule inférieure.

4. Procédé selon l'une quelconque des revendications 1 à 3, comprenant en outre l'étape consistant à, pendant que ladite cabine de pulvérisation vient en prise avec ladite partie de moule supérieure, évacuer l'excès de poudre de résine PIMC de ladite cabine de pulvérisation.

5. Procédé selon l'une quelconque des revendications 1 à 4, comprenant l'étape consistant à, avant la diffusion de ladite charge de résine thermodurcissable plastique, laisser la poudre de résine PIMC appliquée au moins partiellement durcir sur ladite surface de moule supérieure.

6. Procédé selon l'une quelconque des revendications 1 à 5, ladite charge de résine thermodurcissable plastique étant choisie dans le groupe constitué par les polyesters thermodurcissables, l'époxy, les acryliques, les polyphénols, le polyester triglycidyl isocyanurate (TGIC) et le polyester uréthane.

7. Procédé selon l'une quelconque des revendications 1 à 6, ladite poudre de résine PIMC étant choisie dans le groupe constitué par l'époxy, le polyester, le TGIC polyester, les hybrides époxy-polyester, le polyester uréthane, le fluorure de vinylidène, l'acrylique, le poly(chlorure de vinyle), les polyoléfines et le nylon.

8. Dispositif PIMC, comprenant :
a) une presse de moulage adaptée à un moulage par compression de thermodurcissables comprenant un moule ayant moins deux parties de moule :
i. une partie de moule supérieure ayant une surface de moule supérieure ; et
ii. une partie de moule inférieure ayant une surface de moule inférieure ; et
ladite presse de moulage étant conçue pour fermer ledit moule en réunissant ladite partie de moule supérieure et ladite partie de moule inférieure ensemble à un état fermé et en les séparant à un état ouvert ;
b) une cabine de pulvérisation PIMC conçue pour venir en prise de façon réversible avec ladite partie de moule supérieure, de sorte que lorsque ladite cabine de pulvérisation vient en prise avec ladite partie de moule supérieure un bord externe d'une ouverture de ladite cabine de pulvérisation est intimement encerclé par une zone de joint de moule de ladite surface de moule supérieure de sorte à sensiblement isoler ladite surface de moule supérieure dans ladite cabine de pulvérisation ; et
c) un pulvérisateur électrostatique ayant au moins une buse conçue pour l'application électrostatique de poudre de résine PIMC sur ladite surface de moule supérieure lorsqu'elle est sensiblement isolée au sein de ladite cabine de pulvérisation.

9. Dispositif selon la revendication 8, lorsque ladite surface de moule supérieure est sensiblement isolée dans ladite cabine de pulvérisation, l'écart entre ledit bord externe de ladite ouverture de ladite cabine de pulvérisation et ladite zone de joint de moule de ladite partie de moule supérieure étant en moyenne inférieur à 0,2 mm.

10. Dispositif selon l'une quelconque des revendications 8 à 9, comprenant en outre un mécanisme de déplacement de cabine de pulvérisation conçu pour déplacer ladite cabine de pulvérisation de sorte qu'elle vienne en prise avec ladite partie de moule supérieure, pour maintenir ladite cabine de pulvérisation en prise pendant suffisamment longtemps et pour désolidariser ladite cabine de pulvérisation de ladite partie de moule supérieure.

11. Dispositif selon l'une quelconque des revendications 8 à 10, ladite au moins une buse étant conçue pour appliquer un revêtement sensiblement égal de poudre de résine PIMC sur sensiblement l'ensemble de ladite surface de moule supérieure sensiblement simultanément lorsque ladite cabine de pulvérisation est en prise avec ladite partie de moule supérieure.

12. Dispositif selon l'une quelconque des revendications 8 à 10, ladite au moins une buse étant conçue pour se déplacer à l'intérieur de ladite cabine de pulvérisation lorsque ladite cabine de pulvérisation est en prise avec ladite partie de moule supérieure, permettant l'application d'un revêtement sensiblement égal de poudre de résine PIMC sur sensiblement l'ensemble de ladite surface moule supérieure.

13. Dispositif selon l'une quelconque des revendications 8 à 12, ladite au moins une buse étant conçue pour entrer et sortir de ladite cabine de pulvérisation.

14. Dispositif selon l'une quelconque des revendications 8 à 12, ladite au moins une buse étant contenue à l'intérieur de ladite cabine de pulvérisation.

15. Dispositif selon l'une quelconque des revendications 8 à 14, comprenant en outre un ensemble d'évacuation de poudre de résine PIMC fonctionnellement associé à ladite cabine de pulvérisation, conçu pour évacuer la poudre de résine PIMC en suspension à l'intérieur de ladite cabine de pulvérisation lorsque la cabine de pulvérisation est en prise avec ladite partie de moule supérieure.
